# EUROPÄISCHE PATENTSCHRIFT

(11) **EP 0 799 157 B1**
(45) Veröffentlichungstag und Bekanntmachung des Hinweises auf die Patenterteilung: **16.06.1999**
(21) Anmeldenummer: 95944769.9
(22) Anmeldetag: 13.12.1995
(51) Int. Cl.: C01F 7/46, C01F 7/02, B03B 1/00, B02C 13/00

(54) **VERFAHREN UND VORRICHTUNG ZUM REINIGEN VON PULVER**
POWDER CLEANING PROCESS AND DEVICE
PROCEDE ET DISPOSITIF DE NETTOYAGE DE POUDRES

(30) Priorität: 24.12.1994 DE 4446528; 01.12.1995 DE 19544887
(43) Veröffentlichungstag der Anmeldung: 08.10.1997
(73) Patentinhaber: ABB FLÄKT AB, S-120 86 Stockholm (SE)
(72) Erfinder: SCHUH, Lothar, D-68723 Plankstadt (DE); JANSEN, Helge, D-37130 Gleichen-Rheinhausen (DE)
(74) Vertreter: Rupprecht, Klaus, Dipl.-Ing.
(86) Internationale Anmeldenummer: EP9504917
(87) Internationale Veröffentlichungsnummer: WO9620131

(56) Entgegenhaltungen:
- EP-A- 0 337 137
- DE-A- 1 607 465
- FR-A- 2 258 904
- FR-A- 2 499 057
- GB-A- 778 117
- US-A- 4 361 290
- LOSSIUS P ET AL: "REMOVING IMPURITIES FROM SECONDARY ALUMINA FINES" 1.März 1992 , LIGHT METALS, SAN DIEGO, MAR. 1 - 5, 1992, NR. MEETING 121, PAGE(S) 249 - 258 , CUTSHALL E R XP000366151

## Beschreibung

Die Erfindung bezieht auf ein Verfahren und eine Vorrichtung zum mechanischen Reinigen eines Pulvers gemäß dem Oberbegriff der Patentansprüche 1 und 2.

Ein solches Verfahren ist geeignet, Verunreinigungen, die an der Oberfläche von Pulverteilchen haften, zu entfernen. Solche Verfahren kommen beispielsweise bei der Reinigung von pulverförmigem Aluminiumoxid zur Anwendung, das zur Herstellung von Aluminium vor gesehen ist. Das pulverförmige Primär-Aluminiumoxid wird bei der Aluminiumherstellung zunächst dazu benutzt, das bei der Schmelzelektrolyse entstehende Rauchgas zu reinigen. Hierbei wird das Rauchgas an dem primären Aluminiumoxid vorbeigeleitet, wobei sich die aus der Schmelzelektrolyse abdampfenden Teilchen in Form von Fluorid, Eisen, Phosphor, Kohlenstoff, Silizium, Vanadium und Nickel an die Oberfläche des pulverförmigen Aluminiumoxid anheften. Bevor dieses Aluminiumoxid der Schmelzelektrolyse zugeführt wird, müssen die Verunreinigungen in Form von Eisen, Phosphor, Kohlenstoff, Silizium, Nickel und Vanadium entfernt werden, da sonst der Prozeß damit angereichert wird. Dieses würde sich nachteilig auf die Qualität des Aluminiums und die Effektivität des Prozesses auswirken. Das Fluor, das für die Durchführung der Schmelzelektrolyse benötigt wird, muß gesammelt und dem Prozeß wieder zugeführt werden.

Ein Verfahren zum Entfernen von Verunreinigungen von der Oberfläche von pulverförmigen Teilchen ist aus der FR-A-2499057 bekannt, die identisch mit der norwegischen Patentschrift 147791 ist. Bei diesem Verfahren wird ein Luftstrom, der mit dem zu reinigenden Pulver beladen ist, gegen eine Prallplatte geleitet. Der Aufprall bewirkt, daß die an der Oberfläche des Pulvers haftenden Verunreinigungen abgelöst werden. Anschließend werden die Verunreinigungen und das Pulver mittels einer Sichtung voneinander getrennt. Dieses Verfahren ist schwer zu kontrollieren und weist zudem beim Durchsatz von mehreren Tonnen pro Stunde einen zu geringen Wirkungsgrad auf.

Aus der französischen Patentschrift FR-A-2407027 ist ein Verfahren zum Abtrennung von teilchenförmigen Verunreinigungen von der Oberfläche von Pulvern bekannt. Bei diesem Verfahren wird das zu reinigende Pulver in zwei sich kreuzende Luftstrahle eingebracht. Im Kreuzungspunkt dieser Strahlen schlagen die Pulverteilchen aneinander. Dabei reiben die Teilchen aneinander, wobei die an der Oberfläche haftenden Verunreinigungen abgelöst werden. Da die abgetrennten Verunreinigungen leichter als die Pulverteilchen sind, können sie mit Hilfe eines Luftsogs entfernt werden, während die schwereren Pulverteilchen nach unten fallen. Dieses Verfahren ist sehr teuer, wenn es in einem laufenden Großprozeß angewendet wird, da es nicht für die Reinigung von großen Mengen an Pulvern ausgelegt ist.

Aus der DE-A-1607465 ein Prallbrecher zum Brechen von hartem und mittelhartem Gut bekannt. Der Prallbrecher besteht aus einem Gehäuse mit Prallplatten, die gegenüber den Schlagleisten des Rotors angeordnet sind. Ferner weist das Gehäuse einen Schüttrichter für die Zuführung des Guts sowie eine Ausgabeöffnung auf. Die Prallplatte ist unterhalb des Schüttrichters angeordnet. Sie ist dachförmig ausgebildet. Die Prallplatte weist bereichsweise eine Breite auf, die größer ist als der halbe Durchmesser des Rotors.

In der US-A-4361290 ist eine rotierende Schlagmühle beschrieben, mit der Material in drei unterschiedliche Größen zerkleinert und separiert werden kann. Die Schlagmühle ist mit einem Rotor versehen, an dessen Armen Platten zum Zerkleinem des Materials befestigt sind.

Aus der EP-A-337137 ist eine Hammermühle zum Zerkleinem von Erz und ähnlichen Materialen bekannt. Die Vorrichtung wird von einem zylindrischen Gehäuse begrenzt. Im Inneren desselben sind Prallplatten und ein Rotor angeordnet, an dem mehrere Hämmer in einem definieren Abstand voneinander befestigt sind, mittels derer das Erz zerkleinert bzw. gegen die Prallplatten geschleudert wird.

Der Erfindung liegt die Aufgabe zugrunde, ein Verfahren aufzuzeigen, mit dem Verunreinigungen, die an der Oberfläche von Pulvern haften, kostengünstig und mit einem höheren Wirkungsgrad als bisher abgetrennt werden können, sowie eine Vorrichtung aufzuzeigen, mit der dieses Verfahren durchgeführt werden kann.

Die Aufgabe wird, das Verfahren betreffend, durch die Merkmale des Patentanspruchs 1 gelöst.

Die Aufgabe wird, die Vorrichtung betreffend, durch die Merkmale des Patentanspruchs 2 gelöst.

Bei der Durchführung des erfindungsgemäßen Verfahren durchläuft das zu reinigende Pulver eine mechanisch arbeitende Reinigungseinrichtung. Diese umfaßt bei einer Ausführungsform der Erfindung eine Abtrennvorrichtung, der ein Zyklon und/- oder ein Windsichter nachgeschaltet sind. Die Abtrennvorrichtung entspricht im Aufbau und der Funktionsweise einer Prallmühle. Hierin wird das Pulver durch einen Rotor bzw. ein Schlagwerk mit einer vorgegebenen Geschwindigkeit gegen Prallscheiben geleitet, die sich gegenläufig zum Schlagwerk drehen. Über die Drehzahl des Rotors bzw. des Schlagwerks und eine festgelegte Verweilzeit des Pulvers in der Abtrennvorrichtung kann die Aufprallgeschwindigkeit des Pulvers und die Anzahl der Zusammenstöße des Pulvers mit den Platten gesteuert werden. Die Aufprallgeschwindigkeit ist kleiner als 120 m/s. Sie wird bevorzugt auf 20 bis 40 m/s eingestellt. Die Einstellung der Aufprallgeschwindigkeit ist besonders wichtig, da nur hiermit erreicht werden kann, daß die Verunreinigungen vollständig von der Oberfläche des Pulvers entfernt, dieses dabei jedoch nicht zerkleinert wird. Nach der Entnahme des Pulvers und den davon abgelösten Verunreinigungen aus der Abtrennvorrichtung wird das gereinigte Pulver mit einer Teilchengröße von > 10 µm von Pulver mit einer Teilchengröße von < 10 µm und den Verunreinigungen, die ebenfalls nicht größer als 10 µm sind, getrennt. Das geschieht beispielsweise mit Hilfe eines Zyklons und/oder eines Windsichters, die der Abtrennvorrichtung nachgeschaltet sind. Windsichter sind in der Herstellung sehr teuer. Kosten können dadurch eingespart werden, daß der Windsichter dem Zyklon nachgeschaltet wird. Das hat den Vorteil, schon ein Teil des Pulvers mit einer Teilchengröße von > 20 bis 30µm im Zyklon abgetrennt wird. Damit kann ein kleinerer Windsichter verwendet werden. In günstigen Fällen reicht es auch aus, der Abtrennvorrichtung nur einen Zyklon nachzuschalten.

Bei einer vereinfachten Ausführungsform der Reinigungseinrichtung wird auf die Prallmühle und einen Zyklon verzichtet. Die Reinigungseinrichtung besteht einzig und allein aus einem Windsichter. In diesem Fall muß der Windsichter jedoch, so ausgebildet sein, daß die Luftführung in seinem Innenbereich einen Desintegrationseffekt bewirkt. Der Windsichter muß so gebaut sein, das zu reinigende Pulver mit der oben beschriebenen Geschwindigkeit gegen eine oder mehrere Flächen geleitet wird, so daß die Verunreiniginngen, die an dem Pulver anhaften, abgetrennt werden. Die alleinige Verwendung eines Windsichters für die Pulverreiniginng hat den Vorteil, daß damit gleichzeitig die Separierung des gereinigten Pulvers durchgeführt werden kann.

Alle oben beschriebenen Reinigungseinrichtungen sind so ausgebildet, daß das gereinigte Pulver so nach Größe separiert werden kann, daß Pulver mit einer Teilchengröße von > 10 µm der Schmelzelektrolyse zur Herstellung von Aluminium zugeführt wird. Das Pulver mit einer Teilchengröße < 10 µm sowie die Verunreinigungen werden auf einer Deponie gelagert oder als Rohstoff weiterverarbeitet. Mit dem erfindungsgemäßen Verfahren ist es möglich, mindestens 25% des Eisens, mehr als 50% des Phosphors und 25% des Kohlenstoffs zu entfernen, das als Verunreinigung an dem pulverförmigen Aluminiumoxid haftet. Mit diesem Verfahren ist es zudem möglich 60% des Fluors wieder in die Schmelzelektrolyse zurückzuführen. Die Menge der abgetrennten Verunreinigungen 35 sowie die Menge des Fluors, das mit dem erfindungsgemäßen Verfahren zurückgewonnen werden kann, stellt eine signifikante Verbesserung gegenüber den Ergebnissen dar, die mit bekannten Verfahren erzielt werden. Da Vanadium und Nickel am Eisen haftet, wird entsprechend der abgetrennten Menge an Eisen Vanadium bzw. Nickel und aus dem Rauchgas der Schmelzelektrolyse abgesondert.

Die Erfindung wird nachfolgend an Hand von schematischen Zeichnungen näher erläutert.

Es zeigen:
Fig. 1 eine erfindungsgemäße Reinigungseinrichtung,
Fig. 2 eine Variante der in Fig. 1 dargestellten Reinigungseinrichtung,
Fig. 3 eine vereinfachte Ausführungsform der Reinigungseinrichtung,
Fig. 4 einen Windsichter als Abtrenn- und Separiervorrichtung.

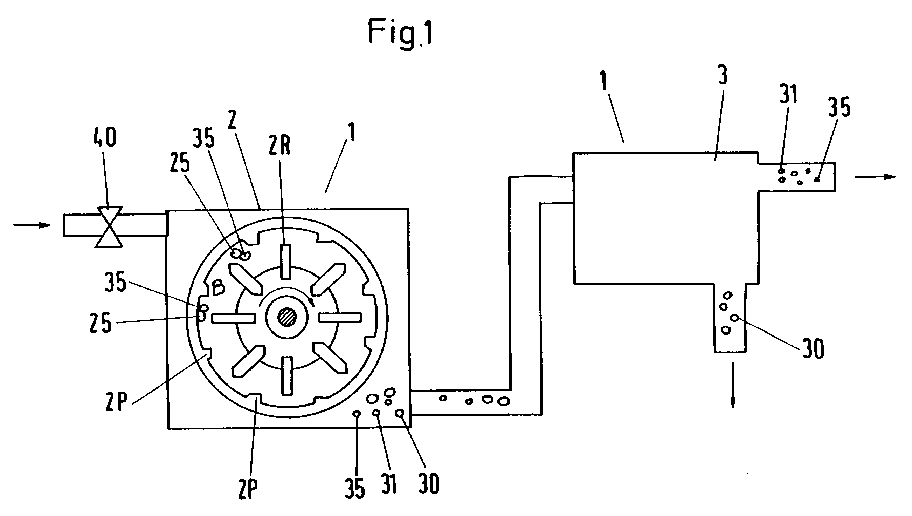

Figur 1 zeigt eine Reinigungseinrichtung 1 zum mechanischen Ablösen von an der Oberfläche von Pulver 25 haftenden Verunreinigungen 35. Diese weist eine Abtrennvorrichtung 2 und einen Windsichter 3 auf. Wie anhand der Figur zu sehen ist, ist der Windsichter 3 der Abtrennvorrichtung 2 unmittelbar nachgeschaltet. Die Abtrennvorrichtung 2 ist im wesentlichen wie eine Prallmühle aufgebaut. Sie verfügt über wenigstens einen Rotor bzw. ein Schlagwerk 2R, mit dessen Hilfe das in die Abtrennvorrichtung 2 eingefüllte Pulver 25 gegen sich gegenläufig zum Schlagwerk drehende Prallscheiben 2P geleitet wird. Die hier dargestellte Reinigungseinrichtung 1 ist für die Reinigung von pulverförmigem, primärem Aluminiumoxid 25 vorgesehen. Andere Pulver können jedoch auch damit gereinigt werden. Das Schlagwerk 2R und die Prallplatten oder -Scheiben sind aus Werkstoffen hergestellt, die für diese Behandlung von pulverförmigem Aluminiumoxid besonders geeignet sind. Vorzugsweise werden die mit dem Aluminiumoxid 25 in Berührung kommenden Bauteile der Abtrennvorrichtung 2 aus einem Hartmetall, einer Keramik, oder einem Polymer mit den entsprechenden Eigenschaften hergestellt. Mit Hilfe der Reinigungseinrichtung 1 werden die an der Oberfläche des Pulvers 25 haftenden Verunreinigungen 35 abgelöst werden. Es handelt sich dabei um Teilchen mit einer Größe von < 10 µm. Bei dem primären Aluminiumoxid 25 bestehen die Verunreinigungen im wesentliche aus Fluor, Eisen, Phosphor, Kohlenstoff, Silizium, Nickel und Vanadium. Das pulverförmige, primäre Aluminiumoxid 25 wird zunächst zur Reinigung des Rauchgases verwendet, das von der Schmelzelektrolyse abdampft. Anschließend wird es selbst gereinigt und der Schmelzelektrolyse für die Aluminiumherstellung zugeführt. Bei der Reinigung des Rauchgases kommt es zur Anlagerung der obenbeschriebenen Verunreinigungen. Die Reinigung des Aluminiumoxid 25 ist erforderlich, damit sich die Schmelzelektrolyse nicht mit diesem Verunreinigungen anreichert. Wird diese Reinigung nicht durchgeführt, so führen Phosphor und Vanadium zum Absinken der Stromausbeute bei der Schmelzelektrolyse. Das bedeutet die Effektivität des Prozesses sinkt. Durch das Eisen und das Silizium wird die Qualität des Aluminiums gemindert. Das pulverförmige, primäre Aluminiumoxid 25 wird über eine Dosiervorrichtung 40 in die Abtrennvorrichtung 2 gefüllt. Der Durchsatz der hier gezeigten Abtrennvorrichtung 2 ist so groß gewählt, daß etwa 20 Tonnen Aluminiumoxid 25 pro Stunde gereinigt werden können. Das Einfüllen des pulverförmigen Aluminiumoxids 25 geschieht automatisch. Die Drehzahl des Schlagwerks 2R ist hierbei so eingestellt, daß das Aluminiumoxid 25 mit einer Geschwindigkeit von 20 bis 30 m/s auf die Prallplatten oder -Scheiben 2P auftrifft. Dabei werden die auf der Oberfläche des pulverförmigen Aluminiumoxids 25 haftenden Verunreinigungen 35 abgetrennt. Etwa 50% des zu reinigenden Aluminiumoxid 25 hat eine Teilchengröße von 50µm. Das übrige Aluminiumoxid 25 weist eine Teilchengröße auf, die größer ist. Die Geschwindigkeit, mit der das Aluminiumoxid 25 gegen die Prallscheiben oder -Platten 2P geleitet wird, ist gerade so groß, daß die Verunreinigungen 35 abgetrennt werden, das pulverförmige Aluminiumoxid 25 dabei jedoch nicht zerkleinert wird. Nachdem das Aluminiumoxid mindestens einige Zehnmal pro Sekunde mit einer Geschwindigkeit von 20 und 30 m/s auf die Prallplatten oder -Scheiben geleitet wurde, wird es zusammen mit den abgetrennten Verunreinigungen 35 der Abtrennvorrichtung 2 entnommen und dem Windsichter 3 zugeführt. Beides geschieht wiederum automatisch. Die Verunreinigungen 35, die < 10 µm sind und das Aluminiumoxid 31 mit der gleichen Teilchengröße werden, wie die Fig.1 zeigt, mit Hilfe eines Luftsogs nach der Seite weggeleitet. Das gereinigte pulverförmige Aluminiumoxid 30, das eine Teilchengröße von > 10 µm hat, wird unter Nutzung der Schwerkraft nach unten aus dem Windsichter 3 abgeleitet und der Schmelzelektrolyse (hier nicht dargestellt) zugeführt.

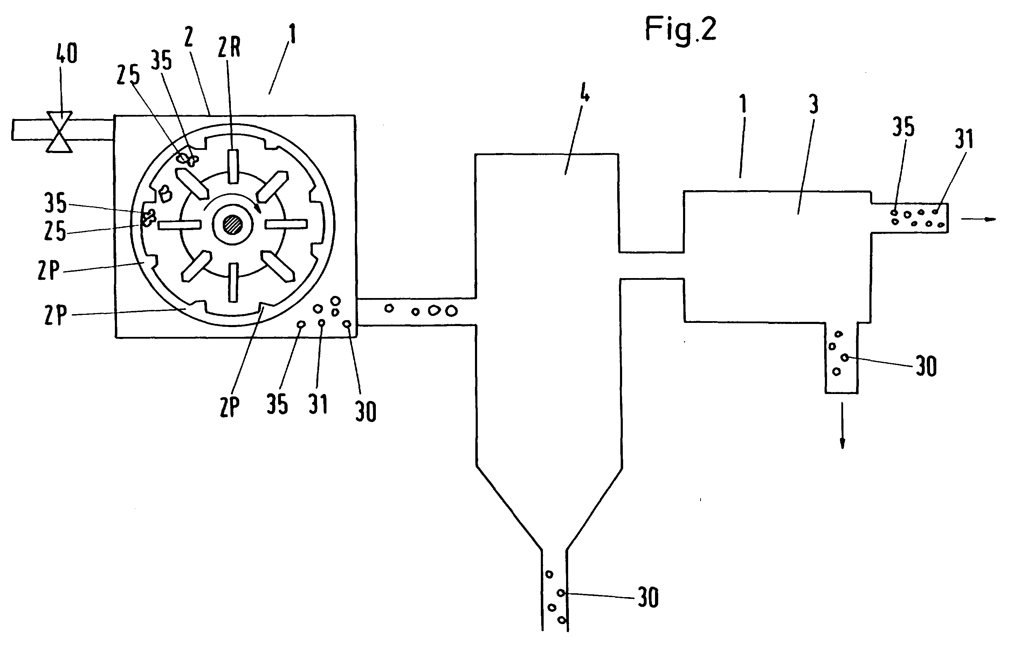

Bei der in Fig. 2 gezeigten Reinigungseinrichtung 1, die im wesentlichen baugleich mit der Reinigungseinrichtung 1 gemäß Fig. 1 ist, ist zwischen die Abtrenneinrichtung 2 und den Windsichter 3 ein Zyklon 4 geschaltet. Von dem Zyklon 4 werden gereinigte Aluminiumoxidteilchen mit einer Größe von mehr 20µm bis 30 µm abgesondert und der Schmelzelektrolyse zugeführt. Das verbleibende Pulver mit einer Teilchengröße < 20 bis 30 µm wird dem Windsichter zur weiteren Trennung zugeführt. Diese Reinigungseinrichtung 1 hat den Vorteil, daß im Gegensatz zur Reinigungseinrichtung 1 nach Fig. 1 ein wesentlich kleinerer Windsichter 3 verwendet werden kann, da breits der Teil des gereinigten Aluminumoxids, dessen Teilchen größer sind als 20 bis 30µm vom Zyklon 4 aüs direkt wieder der Schmelzelektrolyse zugeführt wird. Da 50% des gereinigten Aluminumoxids größer ist als 50 µm, wird die Pulvermenge, die in dem Windsichter 3 weiterzubehandeln ist, durch das Zwischenschalten des Zyklons 4 stark reduziert.

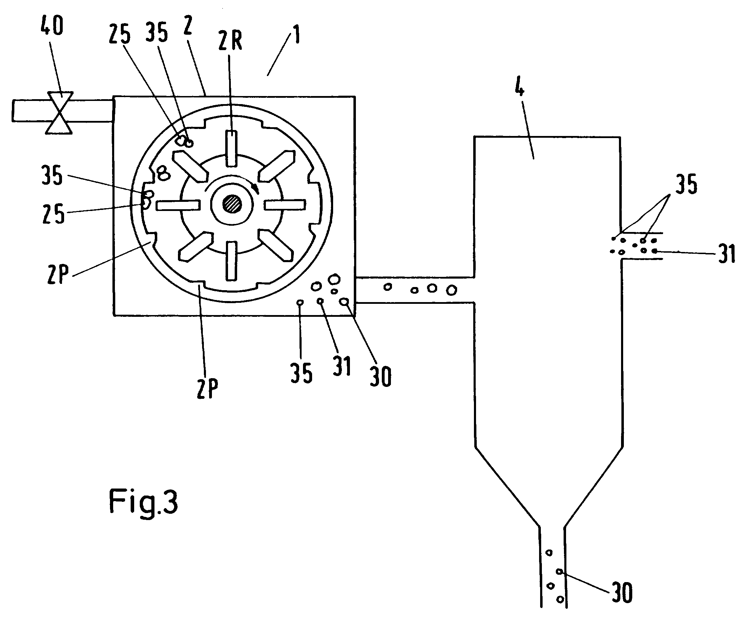

Fig. 3 zeigt eine Reinigungseinrichtung 1, die im wesentlichen baugleich mit der Reinigungseinrichtung 1 gemäß Fig. 1 ist. Hier ist der Abtrenneinrichtung 2 nur ein Zyklon 4 nachgeschaltet. Der Einsatz dieser Reinigungseinrichtung 1 ist dann sinnvoll, wenn eine Abtrennung von Teilchen < 16 µm ausreichend ist.

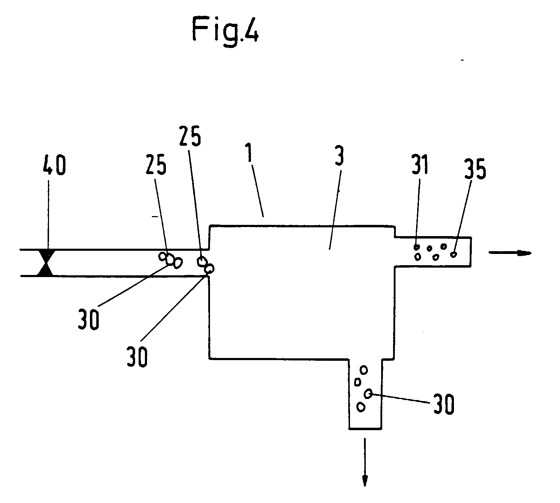

Bei einer weiteren Ausführungsform gemäß Fig. 4 ist für die Abtrennung der Verunreinigungen 35 von dem Pulver 25 und zur Separierung des Pulvers nach Größe nur ein Windsichter 3 vorgesehen. Diesem wird das zu reinigende Pulver 25 ebenfalls über eine Dosiervorrichtung 40 zugeführt. In diesem Fall wird ein Windsichter 3 verwendet, der eine Desinterationszone (hier nicht dargestellt) aufweist. Diese Zone erlaubt es, das zu reinigende Pulver 25 mit der erforderlichen Geschwindigkeit von 20 bis 30 m/s gegen wenigstens eine Fläche (hier nicht dargestellt) zuleiten, so daß die Verunreinigungen abgetrennt werden können. Mit diesem Windsichter 3 kann anschließend die Trennung der Pulver nach Teilchengrößen durchgeführt werden. Es ist hiermit eine Trennung bis zu einer Teilchengröße < 8µm möglich.

Mit dem oben beschriebenen Vorrichtungen ist es möglich, mindestens 25% des Eisens, mehr als 50% des Phosphors, 25% des Kohlenstoffs zu entfernen, das als Verunreinigung 35 an dem pulverförmigen Aluminiumoxid 25 haftet. Mit diesem Verfahren ist es zudem möglich 60% des Fluors wieder in die Schmelzelektrolyse zurückzuführen. Die Menge der abgetrennten Verunreinigungen 35 sowie die Menge des Fluors, das mit dem erfindungsgemäßen Verfahren zurückgewonnen werden kann, stellt eine signifikante Verbesserung gegenüber den Ergebnissen dar, die mit bekannten Verfahren erzielt werden.

## Patentansprüche

1. Verfahren zum mechanischen Reinigen eines Aluminiumoxidpulvers (25), insbesondere von primärem Aluminiumoxid, das zum Abtrennen von an seiner Oberfläche haftenden teilchenförmigen Verunreinigungen (35) gegen eine Fläche (2P) geleitet wird, dadurch gekennzeichnet, dass das zu reinigende Aluminiumoxidpulver (25) in eine Abtrennvorrichtung (2) gefüllt und mit Hilfe des Schlagwerks (2R) dieser Abtrennvorrichtung (2) mit einer Geschwindigkeit von 20 bis 30 m/s mehrere Zehnmal pro Sekunde während eines Zeitraums von < 1 bis 10 Sekunden gegen sich gegenläufig zum Schlagwerk (2R) drehende Prallscheiben (2P) geleitet wird, daß die Teilchen des gereinigten Aluminiumoxidpulvers (30) mit einer Größe von >10 µm von dem gereinigten Aluminiumoxidpulver (31) mit einer Größe < 10 µm und den Verunreinigungen (35) mit Hilfe eines Windsichters (3) und/oder eines Zyklons (4) getrennt und einer Schmelzelektrolyse für die Herstellung von Aluminium zugeführt werden, und daß das Aluminiumoxidpulver (31) mit einer Größe < 10 µm und die Verunreinigungen (35) einer Deponie zugeführt oder als Rohstoff weiterverarbeitet werden.

2. Reinigungseinrichtung zum mechanischen Ablösen von teilchenförmigen Verunreinigungen (35) von der Oberfläche eines Pulvers (25), insbesondere von primärem Aluminiumoxid, mit einer Abtrennvorrichtung (2) innerhalb derer das Pulver (25) gegen eine Fläche (2P) leitbar ist, dadurch gekennzeichnet, daß die Abtrennvorrichtung (2) als Prallmühle mit wenigstens einem Schlagwerk (2R) ausgebildet ist, mit dessen Hilfe das zu reinigende Pulver (25) gegen sich gegenläufig zum Schlagwerk (2R) drehende Prallscheiben (2P) mit einer definierten Geschwindigkeit leitbar ist, und daß das Schlagwerk (2R) und die Prallscheiben (2P) aus einem Material in Form von Hartmetall, einer Keramik, oder einem Polymer gefertigt sind, und daß der Abtrennvorrichtung (2) ein Windsichter (3) und/oder ein Zyklon (4) nachgeschaltet ist.

## Claims

1. Method for the mechanical cleaning of an aluminium oxide powder (25), in particular of primary aluminium oxide, which, in order to strip particulate impurities (35) adhering to its surface, is directed against a surface (2P), the aluminium oxide powder (25) to be cleaned is introduced into a stripping device (2) and, with the aid of the striking mechanism (2R) of this stripping device (2), is directed with a speed of 20 to 30 m/s several tens of times per second for a time period of < 1 to 10 seconds against impact blades (2P) rotating in the opposite direction to the striking mechanism (2R), in that the particles of the cleaned aluminium oxide powder (30) having a size of > 10 µm are separated from the cleaned aluminium oxide powder (31) having a size < 10 µm and the impurities (35) with the aid of an air sifter (3) and/or a cyclone (4), and fed to a smelting electrolysis, for the production of aluminium, and in that the aluminium oxide powder (31) having a size < 10 µm and the impurities (35) are fed to a tip or are further processed as raw material.

2. Cleaning device for the mechanical detachment of particulate impurities (35) from the surface of a powder (25), in particular of primary aluminium oxide, having a stripping device (2) within which the powder (25) can be directed against a surface (2P), characterized in that the stripping device (2) is designed as an impact crusher having at least one striking mechanism (2R), with the aid of which the powder (25) to be cleaned can be directed with a defined speed against impact blades (2P) rotating in the opposite direction to the striking mechanism (2R), and in that the striking mechanism (2R), and the impact blades (2P) are made of a material in the form of hard metal, a ceramic or a polymer, and in that after the stripping device (2) an air sifter (3) and/or a cyclone (4) are connected.

## Revendications

1. Procédé de purification mécanique d'une poudre d'oxyde d'aluminium, en particulier d'oxyde d'aluminium primaire, qui, afin d'éliminer les impuretés (35) particulaires adhérant à sa surface est amené au contact d'une surface (2P), caractérisé par le fait que l'on charge la poudre d'oxyde d'aluminium (25) à purifier dans un dispositif de séparation (2) et, à l'aide du mécanisme batteur (2R) dudit dispositif de séparation (2), on l'amène avec une vitesse comprise dans une plage allant de 20 à 30 m/s, plusieurs dizaines de fois par seconde, pendant un laps de temps de <1 à 20 secondes, contre des plaques déflectrices (2P) animées d'un mouvement de rotation en sens inverse du mécanisme batteur (2R), par le fait qu'on sépare les particules de la poudre d'oxyde d'aluminium (30) purifiée de dimension > 10 µm de la poudre d'oxyde d'aluminium (31) purifiée de dimension <10 µm et des impuretés (35) à l'aide d'un séparateur à air (3) et/ou d'un cyclone (4) et on les achemine vers une électrolyse de fusion pour la fabrication d'aluminium et par le fait que l'on achemine vers une décharge la poudre d'oxyde d'aluminium (31) de dimension <10 µm ou on la traite comme matière première.

2. Installation pour décoller mécaniquement des impuretés (35) particulaires de la surface d'une poudre (25), en particulier d'oxyde d'aluminium primaire, comprenant un dispositif de séparation (2) à l'intérieur duquel la poudre (25) peut être amenée au contact d'une surface (2P), caractérisée par le fait que le dispositif de séparation (2) est agencé en broyeur à choc avec au moins un mécanisme batteur (2R) à l'aide duquel la poudre (25) à purifier peut être amenée avec une vitesse définie contre des plaques déflectrices (2P) qui tournent en sens inverse du mécanisme batteur (2R) et par le fait que le mécanisme batteur (2R) et les plaques déflectrices (2P) sont réalisés en matériau de type métal dur, céramique ou polymère et par le fait qu'un séparateur à air (3) et/ou un cyclone (4) est/sont disposé(s) à la suite du dispositif de séparation (2).
